# EUROPÄISCHE PATENTANMELDUNG

(11) **EP 1 096 413 A1**
(43) Veröffentlichungstag der Anmeldung: **02.05.2001**
(21) Anmeldenummer: 00123520.9
(22) Anmeldetag: 27.10.2000
(51) Int. Cl.: G06K 7/00, G06K 13/08, G06K 13/063, G06K 7/08

(54) **Transportvorrichtung für Chipkarten**

(30) Priorität: 29.10.1999 DE 19952086
(71) Anmelder: ROBERT BOSCH GMBH, 70442 Stuttgart (DE)
(72) Erfinder: Jelinek, Egbert, 31157 Sarstedt (DE)

(57) **Zusammenfassung**

Es wird eine Transportvorrichtung für Speicher- und/oder Auswertemittel aufweisende Chipkarten mit Mitteln zum Transport mindestens einer Chipkarte vorgeschlagen, die durch erste Mittel (21, ..., 29, 31, ..., 39) zur Führung der Chipkarte (1), die einen Spalt (18) zur Aufnahme der Chipkarte (1) bilden, und eine Anordnung der ersten Führungsmittel (21, ..., 29, 31, ..., 39) und der Transportmittel dergestalt, daß diese mechanisch mit den Speicher- und/oder Auswertemitteln (2, 3, 4) nicht in Kontakt treten, auszeichnet.

Die vorgeschlagene Transportvorrichtung ermöglicht den Transport von Chipkarten, beispielsweise aus einer Einführungs- in eine Auswerteposition innerhalb eines Chipkartenlesers, wobei die Speicher- und/oder Auswertemittel der Chipkarte durch die Führungs- und/oder Transportmittel nicht berührt und damit weder beschmutzt noch beschädigt werden.

## Beschreibung

### Stand der Technik

Die Erfindung geht von einer Transportvorrichtung für Chipkarten mit Mitteln zum Transport mindestens einer Chipkarte nach der Gattung des unabhängigen Patentanspruchs aus.

Sogenannte Chipkarten sind als Informationsträger, beispielsweise in Form von Telefonkarten, auf denen ein mittels öffentlicher Fernsprechapparate abtelefonierbares Guthaben gespeichert ist, aber auch in Form von Bank-EC- oder Kreditkarten, mit denen an einem Bankautomat Bargeld abrufbar ist oder Zugangsberechtigungskarten, die anhand eines gespeicherten Codes eine Identifizierung einer zu einem geschützten Bereich zugangsberechtigten Person ermöglichen, weit verbreitet. Diese umfassen Speichermittel zur Speicherung einer Information, beispielsweise in Form eines in der Chipkarte angeordneten, über ein auf der Breitseite der Chipkarte angeordnetes Kontaktfeld kontaktierbaren Mikrochips, eines auf der Rückseite entlang ihrer Einschubrichtung angeordneten Magnetstreifens oder einer Prägung. Die Lage der Speicher- und Auswertemittel der Chipkarte relativ zu ihren äußeren Begrenzungen ist in den Normen ISO 7810 bis ISO 7816 festgelegt.

Die genannten Speichermittel und Auswertemittel zum Abruf der gespeicherten Informationen, wie insbesondere das erwähnte Kontaktfeld und der Magnetstreifen, sind gegen Verschmutzung und mechanische Beschädigung, beispielsweise durch Verkratzen, sehr empfindlich. Eine Verschmutzung oder Beschädigung dieser Mittel zieht oftmals eine nicht mehr einwandfreie Auswertbarkeit der gespeicherten Informationen nach sich.

### Vorteile der Erfindung

Die erfindungsgemäße Transportvorrichtung mit der Merkmalen des Hauptanspruchs, die sich durch Mittel zur Führung einer Chipkarte, die einen Spalt zur Aufnahme der Chipkarte bilden, und eine Anordnung der Führungsmittel dergestalt, daß diese mechanisch mit den Speicher- und/oder Auswertemitteln einer zu transportierenden Chipkarte nicht in Kontakt treten, auszeichnet, hat den Vorteil, daß eine Verschmutzung oder Beschädigung der hierfür besonders anfälligen Speicher- oder Auswertemittel der Chipkarte wirkungsvoll vermieden wird.

Eine sehr enge Führung einer über ein Kontaktfeld verfügenden Chipkarte im Bereich des Kontaktfeldes durch eine entsprechende, dem Kontaktfeld unmittelbar benachbarte Anordnung der Führungsmittel in der Transportvorrichtung bewirkt in vorteilhafter Weise, insbesondere im Falle einer, beispielsweise durch langen Gebrauch, nicht mehr vollständig ebenen Chipkarte, eine Entlastung des unter dem Kontaktfeld angeordneten Chips.

Vorteilhafterweise sind die Führungsmittel innerhalb der Transportvorrichtung derart angeordnet, daß sie eine Führung der Chipkarte in zu deren Oberfläche senkrechter Richtung hauptsächlich in der Nähe der Mitte der Chipkarte entlang deren Längsachse bewirken. Auf diese Weise kann der Karte außerhalb der Führungsmittel genügend Freiraum eingeräumt werden, so daß auch eine gebogene Karte unbelastet und ohne großen Kraftaufwand transportiert werden kann.

Eine weitere vorteilhafte Ausführungsform der Erfindung sieht eine Anordnung der Führungsmittel dergestalt vor, daß diese unabhängig von der Lage, in der die Chipkarte in die Transportvorrichtung eingeführt wurde, mechanisch mit den Speicher- und/oder Auswertemitteln nicht in Kontakt treten. Damit wird auch bei Einführen der Chipkarte in die Transportvorrichtung in um ihre Längsachse gedrehter Lage eine Verschmutzung oder Beschädigung der Speicher- und/oder Auswertemittel ausgeschlossen.

Eine besonders vorteilhafte Ausbildung der Führungsmittel in Form von mindestens einer drehbar gelagerten Walze ermöglicht eine noch verbesserte Schonung der Kartenoberfläche auch außerhalb der Speicher- und/oder Auswertemittel und zudem einen geringeren zu überwindenden Widerstand beim Transport der Chipkarte, da die Rollreibung der Walze auf der Chipkartenoberfläche, eine entsprechend leichtgängige Lagerung der Walze vorausgesetzt, geringer als die Gleitreibung einer festen Führung ausfällt. Zudem können vorteilhafterweise die Transportmittel zum Transport der Chipkarte als Teil der Führungsmittel, nämlich beispielsweise in Form angetriebener Führungsrollen realisiert werden.

### Zeichnungen

Ausführungsbeispiele der Erfindung sind in den Figuren dargestellt und werden nachfolgend näher erläutert. Gleiche Bezugszeichen in verschiedenen Figuren kennzeichnen dabei gleiche Elemente oder Baugruppen.

Es zeigen
Figur 1a in Aufsicht einen Schnitt durch eine Transportvorrichtung gemäß einem ersten Ausführungsbeispiel der Erfindung mit darin befindlicher Chipkarte,
Figur 1b einen Längsschnitt durch die Transportvorrichtung mit darin befindlicher Chipkarte,
Figur 1c einen Querschnitt durch die Transportvorrichtung Kartenhülle mit darin befindlicher Chipkarte,
Figur 2 in Aufsicht einen Schnitt durch eine Transportvorrichtung gemäß einem zweiten Ausführungsbeispiel

### Beschreibung der Ausführungsbeispiele

Unter dem Begriff Chipkarte werden im Zusammenhang mit der vorliegenden Erfindung auch als ID-Karten bezeichnete Karten, also solche Karten verstanden, die Mittel zum Speichern und/oder Auswerten von auf der Karte gespeicherten oder von dieser verarbeiteten Informationen aufweisen, also nicht nur solche Karten, die auch tatsächlich einen Mikrochip aufweisen.

Die erfindungsgemäße Transportvorrichtung für Chipkarten wird nachfolgend am Beispiel eines Chipkartenlesers erläutert, wobei die Transportvorrichtung zum Transport der Chipkarte aus einer Einführungsposition in eine Auswerteposition oder aus der Auswerteposition in eine Entnahmeposition vorgesehen ist.

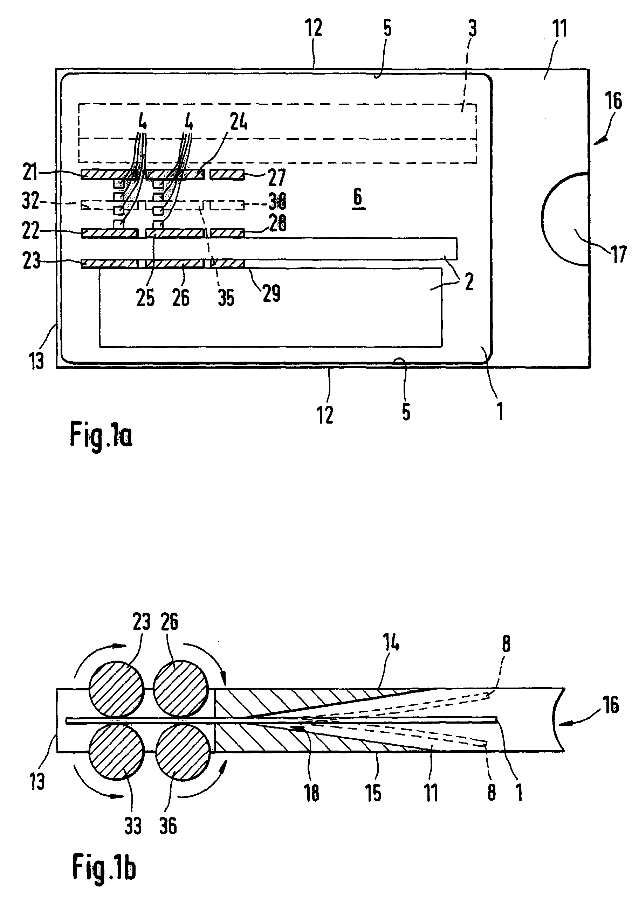

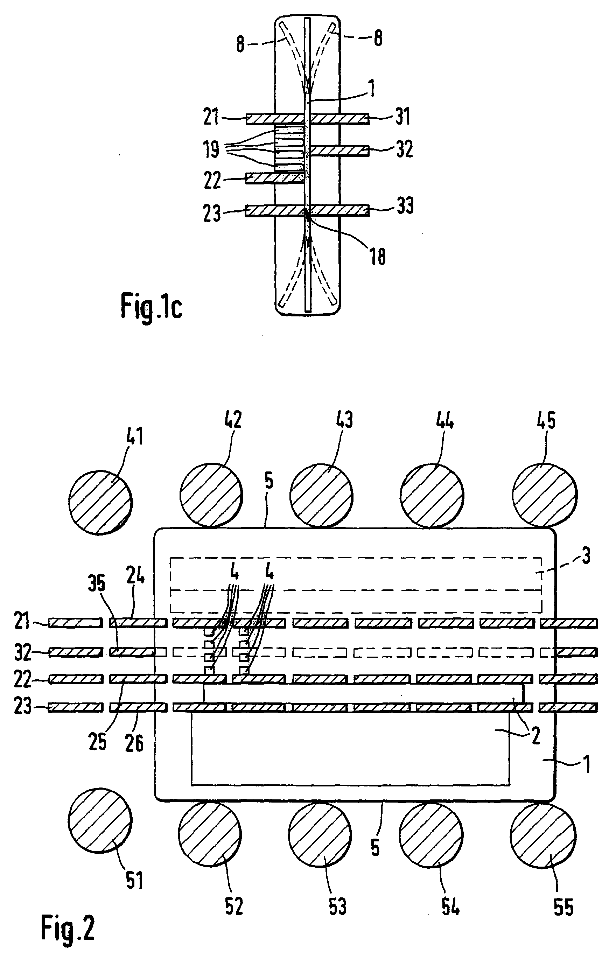

Figur 1a zeigt in Aufsicht einen Schnitt durch einen Chipkartenleser mit einer erfindungsgemäßen Transportvorrichtung und einer darin befindlichen Chipkarte. Der Chipkartenleser umfaßt einen Kartenschacht 11 zur Aufnahme einer auszuwertenden Chipkarte 1. Der Kartenschacht 11 ist durch Seitenwände 12 und eine Rückwand 13, sowie durch eine obere Schachtabdeckung 14 und eine untere Schachtabdeckung 15 abgeschlossen und weist auf der der Rückwand 13 gegenüberliegenden Seite eine Einführungsöffnung 16 zum Einführen einer Chipkarte 1 auf. Die die Einführungsöffnung 16 umfassende Vorderseite des Chipkartenlesers weist eine halbkugelförmige Griffmulde 17 auf, die symmetrisch zur Einführungsöffnung angeordnet ist und einen Zugriff auf die Chipkarte und damit ein Einführen der auszuwertenden Chipkarte in den Chipkartenleser oder ein Entnehmen der Chipkarte aus dem Chipkartenleser erleichtert. Der Kartenschacht 11 ist so dimensioniert, daß, wie in Figur 1a dargestellt, bei in Auswertestellung befindlichen Chipkarte 1 zwischen dieser und der Vorderseite des Chipkartenlesers genügend Raum zur Unterbringung von in der Figur nicht dargestellten Mitteln zur Trennung der Chipkarte von der Einführungsöffnung 16 bleibt. Diese Trennungsmittel dienen der Unterbindung von Manipulationsversuchen, beispielsweise durch über Kabel mit einem Rechner verbundene Chipkartenattrappen. Am der Rückwand 13 zugewandten Ende des Kartenschachts 11 sind, wie in Figur 1c dargestellt, Auswertemittel für die auszuwertende Chipkarte 1, beispielsweise in Form von Gegenkontakten 19 zur Kontaktierung der Kontaktflächen 4 der in der Auswertestellung befindlichen Chipkarte 1 vorgesehen.

Am der Rückwand 13 zugewandten Ende des Kartenschachts 11 ist außerdem die erfindungsgemäße Transportvorrichtung für Chipkarten angeordnet. Diese umfaßt Transportmittel zum Transport der Chipkarte von der Einführungsöffnung 16 in die Auswerteposition oder aus der Auswerteposition in die Entnahmeposition, also zur Einführungsöffnung 16. Weiter umfaßt die Transportvorrichtung erste Führungsmittel zur Führung der Chipkarte während des Transports in die Auswerte- oder die Entnahmeposition in zur Chipkartenoberfläche senkrechter Richtung. Schließlich umfaßt die Transportvorrichtung weitere Führungsmittel zur Führung der Chipkarte während des Transports in seitlicher Richtung.

Die Transport- und die ersten Führungsmittel sind bei dem in der Figur dargestellten Ausführungsbeispiel in Form von Walzen realisiert, die um Achsen parallel zur Chipkartenoberfläche und senkrecht zur Transportrichtung drehbar angeordnet sind. Die Walzenanordnung umfaßt obere 21, 22, 23, 24, 25, 26 und untere Walzen 31, 32, 33, 34, 35, 36, die einen zur Chipkartenoberfläche 6 parallelen Spalt 18 zur Aufnahme der Chipkarte 1 bilden. Die Walzen sind, beispielsweise über einen Elektromotor mit Getriebe, derart angetrieben, daß die oberen Walzen mit einer im wesentlichen gleichen Drehzahl in, wie in der Figur durch Pfeile angedeutet, eine erste Richtung drehen, während die unteren Walzen mit der im wesentlichen gleichen Drehzahl in die entgegengesetzte Richtung drehen. Die oberen und unteren Walzen sind derart zueinander angeordnet, daß der durch sie gebildete Spalt 18 eine geringfügig geringere Höhe als die Chipkartendicke aufweist, so daß die Walzenoberfläche auf die Oberfläche einer zwischen ihnen befindlichen Chipkarte gepreßt wird. Infolge der Anpreßkraft der Walzen auf die Chipkarte ergibt sich zwischen Walzen und Chipkartenoberfläche ein Reibschluß, infolge dessen bei Rotation der Walzen die Chipkarte entlang des Schlitzes 18 zwischen oberen 21 bis 26 und unteren Walzen 31 bis 36 transportiert wird.

Weiter sind im Kartenschacht 11 weitere erste Führungsmittel in Form oberer und unterer Führungsschienen 27, 28, 29 und 37, 38, 39 angeordnet, die ebenfalls einen zur Chipkartenoberfläche 6 parallelen Spalt 18 zur Aufnahme der Chipkarte 1 bilden. Die Führungsschienen sind zur Einführungsöffnung hin abgeschrägt, so daß der Spalt zur Einführungsöffnung hin eine Aufweitung aufweist, die eine Zentrierung einer in die Einführungsöffnung eingeführten Chipkarte 1 in Richtung auf den Spalt 18 bewirkt.

Die Seitenwände 12 des Kartenschachts wirken bei dem beschriebenen Ausführungsbeispiel in Verbindung mit den Seitenkanten 5 der zu transportierenden Chipkarte als weitere Führungsmittel, also als seitliche Führung der Chipkarte 1.

Die Walzen als Transport- und erste Führungsmittel sind so angeordnet, daß sie sowohl in der dargestellten Position der Chipkarte, wie auch in um ihre Längsachse gedrehter Position ihre Speicher- und/oder Auswertemittel, nämlich die Kontaktflächen 4 und/oder den Magnetstreifen 3 und/oder die Prägung 2 nicht berühren, gleichzeitig aber eine enge Führung der Chipkarte im Bereich der Speicher- und/oder Auswertemittel und damit eine präzise Ausrichtung dieser Mittel zu entsprechenden Auswertemitteln des Chipkartenlesers gewährleisten. Dazu ist eine erste Reihe von oberen Walzen 21, 24 derart angeordnet, daß sie unmittelbar neben den Kontaktflächen 4 der Chipkarte zwischen den Kontaktflächen 4 und dem Magnetstreifen 3 der in der dargestellten Position befindlichen Chipkarte deren Oberfläche berühren. Eine zweite Reihe oberer Walzen 22, 25 ist zwischen Kontaktflächen 4 und erstem Abschnitt der Prägefläche, eine dritte Reihe oberer Walzen 23, 26 zwischen erstem und zweitem Abschnitt der Prägefläche angeordnet. Eine erste Reihe von unteren Walzen 31, 34, sowie eine dritte Reihe unterer Walzen 33, 36 sind exakt gegenüber den entsprechenden oberen Walzenreihen angeordnet. Eine zweite unterer Walzenreihe 32, 35 ist so angeordnet, daß bei um die Längsachse gedreht eingeführter Chipkarte die zweite untere Walzenreihe die Chipkartenoberfläche 6 zwischen Kontaktfeld 4 und Prägefeld 2 berührt. Quer zur Transportrichtung einander benachbart angeordnete Walzen, wie beispielsweise die Walzen 21, 22, 23 sind auf einer gemeinsamen Achse angeordnet, so daß der Aufwand für Lagerung und Antrieb der einzelnen Walzen gering ist. Die Breite der Walzen liegt im Bereich einiger Zehntel Millimeter bis zu einem Millimeter. Die Walzenbreite ist dabei nach oben durch den Abstand der Seitenwände 12 als weiteren Führungsmitteln begrenzt, wobei ein genau auf die Breite der Chipkarte abgestimmter Seitenwandabstand die größtmögliche Walzenbreite zuläßt.

Die oberen und unteren Führungsschienen 27 bis 29 und 37 bis 39 sind entsprechend entlang den oberen und unteren Walzenreihen angeordnet.

Wird eine Chipkarte in den Kartenschacht in der dargestellten Position, also Kontaktflächen 4 nach oben und in Einschubrichtung vorn, eingeführt, so wird diese durch die Führungsschienen 27, 28, 29, sowie 37, 38, 39 auf den durch die Walzen 21 bis 26 und 31 bis 36 gebildeten Spalt 18 zentriert. Gelangt die Chipkarte 1 dabei in den Aktionsradius der Walzen 21 bis 36, so wird die Chipkarte durch deren Rotation in Einschubrichtung weiter transportiert. Ein Endabschalter, der beispielsweise auf die Signale einer am Ende des Kartenschachts angeordneten Lichtschranke reagiert, stoppt die Rotation der Walzen, sobald die Chipkarte 1 in der Auswerteposition angelangt ist. Die Chipkarte wird durch die Walzen in der Auswerteposition gehalten, wobei die Anordnung der Walzen zueinander eine Fixierung und genaue Ausrichtung der Karte relativ zu den Auswertemitteln 19 des Chipkartenlesers im Bereich der Speicher- und/oder Auswertemittel 2, 3, 4 der Chipkarte 1 bewirkt, während die Chipkarte im Bereich ihrer Ränder 5 keine Fixierung erfährt, so daß auch eine um ihre Längsachse verbogene Chipkarte - in Figur 1c mit den gestrichelten Linien und dem Bezugszeichen 8 angedeutet - weitgehend spannungsfrei in der Transportvorrichtung gehalten und transportiert wird.

Wie in den Figuren 1a und 1b dargestellt, wird die Chipkarte 1 in der Auswerteposition nur auf etwas einem Drittel ihrer Länge von den ersten Führungsmitteln fixiert. Damit wird erreicht, daß auch eine um ihrer Querachse verbogene Chipkarte 1 - in Figur 1b mit den gestrichelten Linien und dem Bezugszeichen 8 angedeutet - in der Auswerteposition, wie auch während ihres Transports in die Auswerteposition, weitgehend spannungsfrei fixiert wird.

Nach Auswertung der Chipkarte drehen die Walzen in der eingezeichneten Richtung entgegengesetzter Richtung, also bei dem in Figur 1b dargestellten Beispiel die unteren Walzen 31 bis 36 im Uhrzeigersinn, die oberen Walzen 21 bis 26 entgegen dem Uhrzeigersinn, so daß die mit den Walzen reibschlüssig verbundene Chipkarte 1 nach rechts, also in Richtung der Einführungsöffnung 16 transportiert wird.

Bei Erreichen der Entnahmeposition berühren die Walzen die Kartenoberfläche nicht mehr, es besteht also kein Reibschluß mehr zwischen Kartenoberfläche 6 und den Walzen 21 bis 26 und 31 bis 36, so daß die Karte nicht über die nun erreichte Entnahmeposition hinaus transportiert wird. Die Höhe der in Einführungsrichtung unmittelbar vor den Rollen liegenden engsten Stelle des durch die Führungsschienen 27 bis 29 und 37 bis 39 gebildeten Spalts 18 ist geringfügig geringer als die Dicke der auszuwertenden Chipkarte gewählt, so daß auf diese eine Klemmkraft in zur Kartenoberfläche 6 senkrechter Richtung einwirkt. Diese Klemmkraft wird durch den Verbund aus Seitenwänden 12 und oberer und unterer Schachtabdeckung 14 und 15 aufgebracht. Infolge der Klemmkraft senkrecht zur Kartenoberfläche wird die Chipkarte in der Entnahmeposition durch die Führungsschienen fixiert und sichert die Chipkarte 1 gegen ein unbeabsichtigtes Herausfallen aus dem Chipkartenleser.

Ein zweites, in Figur 2 dargestelltes, Ausführungsbeispiel der Erfindung sieht vor, daß die Transportmittel zum Transport der Chipkarte 1 innerhalb der Transportvorrichtung als Teil der weiteren Führungsmittel ausgeführt sind, oder gleichzeitig die weiteren Führungsmittel bilden.

Dazu sind die Seitenwände 12 des Kartenschachts 11 als in Transportrichtung, also entlang der Seitenwände 12 nebeneinander angeordnete, um Achsen senkrecht zur Kartenoberfläche drehbar gelagerte Walzen 41, 42, 43, 44, 45, 51, 52, 53, 54, 55 ausgebildet. Diese werden infolge einer Vorspannung ihrer Lagerung in Richtung zur Mitte des Kartenschachts 11 gegen die Kanten 5 einer zu transportierenden Chipkarte gepreßt, so daß die Walzenoberflächen und die Chipkartenkanten 5 reibschlüssig miteinander verbunden sind. Die Walzen 41 und 51 rechts und links des Kartenschachts, die nicht mit der Chipkarte 1 in Verbindung stehen, sind infolge Federkraft leicht zur Mitte des Kartenschachts 11 hin versetzt angeordnet und werden bei Transport der Chipkarte 1 entlang der Transportrichtung nach links durch die Chipkarte auseinandergedrückt. Werden nun bei der in der Figur dargestellten Anordnung die in Transportrichtung rechts der Karte liegenden Walzen 41, 42, 43, 44, 45, die in der Figur oberhalb der Karte liegen, in der Aufsicht im Uhrzeigersinn, die links der Karte angeordneten Walzen 51, 52, 53, 54, 55, die in der Figur unterhalb der Karte 1 dargestellt sind, in der Aufsicht gegen der Uhrzeigersinn angetrieben, wird die Chipkarte 1 in der Figur nach links transportiert.

Die Walzen 41 bis 45 und 51 bis 55 erfüllen neben ihrer Funktion als Transportmittel im in Figur 2 dargestellten Ausführungsbeispiel auch die Funktion der weiteren Führungsmittel, nämlich die Führung der Chipkarte 1 mittels ihrer Kanten 5 entlang der Transportrichtung.

Die ersten Führungsmittel können beim zweiten Ausführungsbeispiel entweder in Form von Führungsschienen oder in Form von frei drehbar gelagerten Walzen 21 bis 26 und 31 bis 36 ausgeführt sein. Hinsichtlich der Anordnung der ersten Führungsmittel unterscheidet sich das zweite Ausführungsbeispiel nicht vom ersten Ausführungsbeispiel.

Weitere denkbare Ausführungsformen ergeben sich durch Mischformen der beiden beschriebenen Ausführungsbeispiele. So können beispielsweise die sowohl die ersten, wie auch die weiteren Führungsmittel Transportmittel aufweisen. Ebenso können auch erste, wie auch weitere Führungsmittel teilweise als Transportmittel, teilweise als passive Führungsmittel in Form nicht angetriebener Walzen oder Führungsschienen/Seitenwände realisiert sein.

## Patentansprüche

1. Transportvorrichtung für Speicher- und/oder Auswertemittel aufweisende Chipkarten mit Mitteln zum Transport mindestens einer Chipkarte,
gekennzeichnet durch
erste Mittel (21, ..., 29, 31, ..., 39) zur Führung der Chipkarte (1), die einen Spalt (18) zur Aufnahme der Chipkarte (1) bilden, und
eine Anordnung der ersten Führungsmittel (21, ..., 29, 31, ..., 39) dergestalt, daß diese mechanisch mit den Speicher- und/oder Auswertemitteln (2, 3, 4) nicht in Kontakt treten.

2. Transportvorrichtung nach Anspruch 1, gekennzeichnet durch eine Ausbildung der ersten Führungsmittel als oberhalb der Chipkartenoberfläche angeordnete obere Führungsmittel (21, ..., 29) und unterhalb der Chipkarte angeordnete untere Führungsmittel (31, ..., 39).

3. Transportvorrichtung nach einem der vorstehenden Ansprüche, gekennzeichnet durch eine Anordnung der ersten Führungsmittel (21, ..., 29, 31, ..., 39) derart, daß diese eine Führung der zu transportierenden Chipkarte (1) in zur Chipkartenoberfläche (6) im wesentlichen senkrechter Richtung bewirken.

4. Transportvorrichtung nach einem der vorhergehenden Ansprüche, gekennzeichnet durch eine Anordnung der ersten Führungsmittel (21, ..., 29, 31, ..., 39) dergestalt, daß diese eine Stabilisierung der Chipkarte (1) im Bereich der Speichermittel und/oder Auswertemittel (2, 3, 4) bewirken.

5. Transportvorrichtung nach einem der vorhergehenden Ansprüche, dadurch gekennzeichnet, daß zur Stabilisierung der Chipkarte (1) im Bereich der Speicher- und/oder Auswertemittel (2, 3, 4) die ersten Führungsmittel (21, ..., 29, 31, ..., 39) entlang der Transportrichtung in einem im wesentlichen der Breite der Speicher- und/oder Auswertemittel (2, 3, 4) der Chipkarte (1) entsprechenden Abstand angeordnet sind.

6. Transportvorrichtung nach einem der vorstehenden Ansprüche, gekennzeichnet durch weitere Führungsmittel (41, ..., 45, 51, ..., 55), die eine seitliche Führung der Chipkarte (1) entlang der Transportrichtung bewirken.

7. Transportvorrichtung nach einem der vorstehenden Ansprüche gekennzeichnet durch eine Ausbildung der ersten und/oder weiteren Führungsmittel in Form wenigstens einer drehbar gelagerten Walze (21, ..., 26, 31, ..., 36, 41, ..., 45, 51, ..., 55).

8. Transportvorrichtung nach einem der vorstehenden Ansprüche, gekennzeichnet durch eine Ausführung der Transportmittel in Form mindestens einer angetriebenen Walze (21, ..., 26, 31, ..., 36, 41, ..., 45, 51, ..., 55), die reibschlüssig mit der zu transportierenden Chipkarte (1) in Verbindung steht.

9. Transportvorrichtung nach einem der vorstehenden Ansprüche, dadurch gekennzeichnet, daß die Transportmittel als Teil der ersten und/oder weiteren Führungsmittel (21, ..., 29, 31, ...., 39, 41, ..., 45, 51, ..., 55) ausgebildet sind.

10. Transportvorrichtung nach einem der Ansprüche 1 bis 9 zur Verwendung in einem Chipkartenleser.
